# EUROPÄISCHE PATENTSCHRIFT

(11) **EP 0 538 609 B1**
(45) Veröffentlichungstag und Bekanntmachung des Hinweises auf die Patenterteilung: **12.04.1995**
(21) Anmeldenummer: 92115259.1
(22) Anmeldetag: 07.09.1992
(51) Int. Cl.: A61G 5/10, A61G 5/00

(54) **Verstellbarer Rollstuhl**
Adjustable wheelchair
Chaise roulante réglable

(30) Priorität: 21.10.1991 DE 9113058 U
(43) Veröffentlichungstag der Anmeldung: 28.04.1993
(73) Patentinhaber: MEYRA WILHELM MEYER GmbH & Co KG, D-32689 Kalletal (DE)
(72) Erfinder: Weege, Rolf-Dieter, Dr., W-4925 Kalletal (DE)
(74) Vertreter: Leine, Sigurd, Dipl.-Ing.

(56) Entgegenhaltungen:
- GB-A- 2 148 805
- US-A- 4 768 797
- US-A- 5 060 962

## Beschreibung

Die Erfindung betrifft einen verstellbaren Rollstuhl der im Oberbegriff des Anspruchs 1 genannten Art.

Durch die EP 0 255 804 ist ein Rollstuhl der betreffenden Art mit einem Rahmen, zwei Hinterrädern und zwei Vorderrädern bekannt. Die beiden Hinterräder sind über eine starre Hinterachse miteinander verbunden. Die Hinterachse ist beidseitig über jeweils eine in der Höhe verstellbare Halterung mit dem Rahmen verbunden und ist für eine Sturzeinstellung mit einer Wasserwaage ausgestattet. Mit Hilfe dieser Wasserwaage kann je nach Einstellung der beiden Vorderräder die Hinterachse in der Halterung so lange gedreht werden, bis die Wasserwaage im Nullpunkt steht, d.h. bis die beiden Hinterräder eine genau parallele Hinterradspur aufweisen. Die beiden Hinterräder sind jeweils über eine Steckachse in eine Radachsaufnahmebohrung aufweisenden Endstücken der Hinterachse axial und radial spielfrei gelagert, wobei die Radachsaufnahmebohrungen der Endstücke der Hinterachse unter einem Winkel zur Hinterachse verlaufen, um so den gewünschten Sturz zu erhalten. Der bekannte Rollstuhl weist mehrere Nachteile auf: Für verschiedene Sturzeinstellungen müssen verschiedene Hinterachsen vorgehalten und eingesetzt werden. Fertigungsfehler und insbesondere Verformungen vor allem des Rahmens durch rauhen Betrieb beispielsweise infolge Schlageinwirkung etc., wodurch eine unerwünschte Vor- oder Nachspur der Hinterräder - insbesondere auch unterschiedliche Radspuren für beide Hinterräder - auftreten kann, sind beim bekannten Rollstuhl nur durch aufwendige Reparaturarbeiten in einer Werkstatt kompensierbar.

Durch die DE-OS 37 42 547 ist ein Rollstuhl bekannt, bei dem die Halterung fest an dem Rahmen des Rollstuhls angebracht ist. Das Halteteil weist in vertikaler Richtung eine Lochreihe auf, in die die Achse des jeweiligen Rades in einer unterschiedlichen Höhe einschraubbar ist, um so die Neigung des Sitzes verstellen zu können, was beispielsweise bei der Ausübung eines Sports mit dem Rollstuhl erwünscht ist. Das Halteteil ist um eine vertikale Achse verstellbar, um so Änderungen des Vorlaufs der beiden Räder, also ihre Ausrichtung zur Fahrtrichtung, einstellen und ausrichten zu können. Dieses Erfordernis ergibt sich aufgrund der Tatsache, daß sich wegen des negativen Sturzes der angetriebenen Räder ihr Vorlauf bei Verstellung der Achshöhe ändert, wenn die Achse starr mit dem Rahmen verbunden ist. Das Halteteil ist bei dieser bekannten Konstruktion zwischen zwei die vertikale Schwenkachse bildenden Schrauben schwenkbar gehalten, wobei die Schwenklage durch zwei Einstellschrauben einstellbar ist, die zu beiden Seiten eines Teils der Halterung angreifen. Diese bekannte Konstruktion ist sehr aufwendig und kompliziert, sowohl in ihrem Aufbau als auch in ihrer Handhabung.

Die Aufgabe der vorliegenden Erfindung besteht darin, einen Rollstuhl der eingangs genannten Art so auszubilden, daß mit geringem Aufwand eine Korrektur der Hinterradspur oder des Hinterradsturzes nicht nur durch Höhenverstellung der Räder, sondern auch durch Fertigungsfehler und durch äußere Einflüsse hervorgerufene Sturzverstellungen der Hinterräder möglich ist.

Diese Aufgabe wird durch die Ausbildung gemäß Kennzeichen des Anspruchs 1 gelöst.

Durch die erfindungsgemäße Ausbildung können durch Lösen der Halterungen die Halteteile verdreht und kann damit die Richtung der Radachsen der Hinterräder verstellt werden. Die beiden Halteteile können dabei unabhängig voneinander und damit unterschiedlich verdreht werden. Hierdurch ist es möglich, jede durch beliebige Ursachen hervorgerufene Sturzänderung an jedem Rad individuell auszugleichen. Durch Höhenverstellung, Fertigungsfehler oder durch Verformungen des Rahmens beispielsweise durch Schlageinwirkung hervorgerufene Sturzänderungen - auch ungleichmäßige Sturzänderungen der Hinterräder - sind so mühelos mit geringstem Aufwand kompensierbar. Falls gewünscht, ermöglicht die erfindungsgemäße Ausbildung praktisch auch jede beliebige Änderung des vorgesehenen Sturzes der Hinterräder und/oder die Einstellung oder Beseitigung einer Vor- oder Nachspur.

Gemäß einer zweckmäßigen Weiterbildung der Erfindung sind die Halterungen am Rahmen in der Höhe und/oder horizontal verstellbar ausgebildet.

Gemäß einer weiteren zweckmäßigen Weiterbildung der Erfindung ist das Halteteil im wesentlichen zylindrisch und in einer komplementären Ausnehmung in der Halterung festklemmbar gehalten. Dabei ist es auch zweckmäßig, daß das Halteteil einen umlaufenden Flansch aufweist, der von einem Klemmteil gegen die Halterung festklemmbar ist.

Eine besonders zweckmäßige Weiterbildung der Erfindung besteht darin, daß die Halterung entfernt vom Halteteil eine vertikale Bohrung aufweist, im Bereich der Bohrung quer zur Drehachse des Halteteils geteilt ist und eine sich durch die Bohrung erstreckende, im wesentlichen vertikale Stange oder ein Rohr des Rahmens des Rollstuhls umgreift. Das geteilte Halteteil und das Klemmteil weisen zu beiden Seiten der Stange oder des Rohres miteinander fluchtende Bohrungen auf, durch die Schrauben führen, die gleichzeitig das Klemmteil gegen die Halterung und die beiden Teile der Halterung gegeneinander ziehen und so gleichzeitig das Halteteil für die Achse des Rades und die Halterung an der Stange oder dem Rohr festziehen. Mit anderen Worten bedeutet dies, daß nach leichtem Lösen der Schrauben gleichzeitig eine Höhenverstellung und die Anpassung des Sturzes erfolgen kann. Diese Konstruktion ist besonders einfach im Aufbau und zweckmäßig in der Handhabung.

Um ein Verdrehen der Halterungen nach dem Lösen zu vermeiden und ihre Ausrichtung zu gewährleisten, ist es gemäß einer Weiterbildung der Erfindung zweckmäßig, daß die Halterungen für die beiden Hinterräder durch eine eine Hinterachse bildende Stange miteinander verbunden sind.

Anhand der Zeichnung soll die Erfindung näher erläutert werden.
- Figur 1: ist eine Draufsicht,
- Figur 2: ist eine Ansicht von hinten,
- Figur 3: ist eine Draufsicht auf einen Rollstuhl gemäß der Erfindung,
- Figuren 4, 5 und 6: entsprechen den Figuren 1, 2 und 3 und zeigen den Zustand nach einer Höhenverstellung der Hinterräder ohne Ausgleich des Sturzes,
- Figur 7: zeigt eine vergrößerte Einzelheit aus den Figuren 1 - 4 im Horizontalschnitt im Bereich Nabe und Halterung eines Hinterrades.

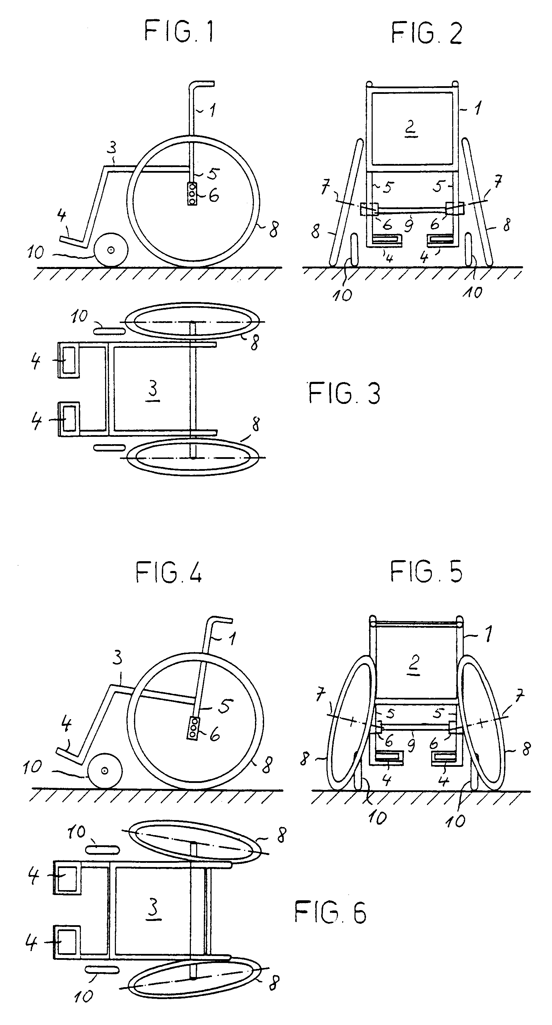

Figur 1 zeigt ein Ausführungsbeispiel eines Rollstuhls gemäß der Erfindung von der Seite, Figur 2 von hinten und Figur 3 von oben. Die Darstellung ist nur prinzipiell. Der Rollstuhl weist einen Rahmen 1 auf, an dem sich eine Rückenlehne 2, ein Sitz 3 und eine Fußstütze 4 befinden. An einem sich nach unten erstreckenden Rohr 5 befindet sich eine Halterung 6, die eine Radachse 7 eines Hinterrades 8 hält. Da der Rollstuhl symmetrisch ausgebildet ist, sind die auf beiden Seiten des Rollstuhls vorhandenen Teile mit gleichen Bezugsziffern versehen. Die Halterungen 6 sind durch eine die Hinterachse bildende Stange 9 miteinander verbunden. Auf die Stange 9 kann gegebenenfalls verzichtet werden. Neben den Hinterrädern 8 sind Vorderräder 10 vorgesehen.

Die Darstellungen in den Figuren 4, 5 und 6 stimmen im wesentlichen mit den Figuren 1 - 3 überein. Ein Unterschied besteht jedoch darin, daß die Halterung 6 an dem Rohr 5 nach oben in Richtung auf den Sitz 3 verschoben ist, wodurch der Sitz 3 im hinteren Bereich abgesunken ist und damit eine Neigung schräg nach hinten erhalten hat. In dieser Lage sitzt der Benutzer des Rollstuhls fester auf dem Sitz, was beispielsweise dann erwünscht ist, wenn mit dem Rollstuhl Sport getrieben wird.

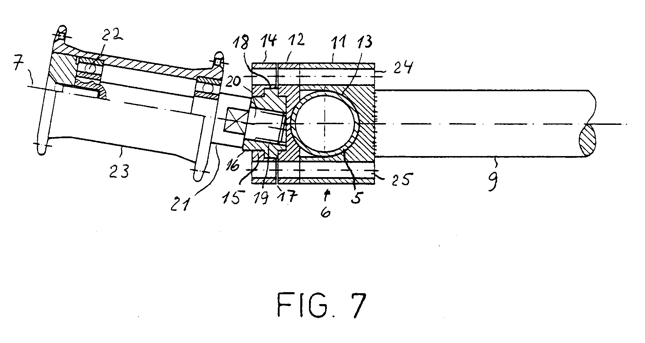

Aus den Figuren 5 und 6 wird deutlich, daS sich aufgrund der Absenkbewegung der Sturz geändert hat und die Hinterräder 8 eine Nachspur erhalten haben, derart, daß die Räder bei Geradeausfahrt auseinanderzulaufen trachten. Durch die Nachspur erhöht sich der Fahrwiderstand, was unerwünscht ist. Aus diesem Grund ist es zweckmäßig, die Radachsen der Hinterräder 8 wieder so auszurichten, daß sie exakt geradeaus laufen. Um dies in einfacher Weise zu erreichen, ist die Halterung 6 erfindungsgemäß in besonderer Weise ausgebildet, wie das im einzelnen aus der nachfolgend beschriebenen Figur 7 hervorgeht.

Figur 7 zeigt einen vergrößerten Horizontalschnitt durch Figur 2 im Bereich der Halterung 6 dicht oberhalb der Hinterachse 9, und zwar nur im Bereich der Halterung 6 und der Radachse 7 des Hinterrades 8. Die Halterung 6 besteht aus zwei Teilen 11 und 12, die das Rohr 5 umgreifen. Durch die Halterung 6 erstreckt sich eine vertikale Bohrung 13, mit der die beiden Teile 11 und 12 das Rohr 5 so umgreifen, daß diese dann, wenn sie fest gegeneinander gezogen sind, fest an das Rohr 5 angeklemmt sind.

Auf der dem Teil 11 abgewandten Seite des Teils 12 befindet sich ein Klemmteil 14, das eine Ausnehmung 15 aufweist, die sich teilweise in das Teil 12 erstreckt und die komplementär zu einem darin eingesetzten Halteteil 16 ausgebildet ist. Zwischen dem Teil 12 und dem Klemmteil 14 befindet sich ein kleiner Spalt 17. Außerdem weist das Halteteil 16 einen umlaufenden Flansch 18 auf.

In dem Halteteil 16 befindet sich eine Gewindebohrung 19, in die ein Gewindezapfen 20 eines Achszapfens 21 eingeschraubt ist, auf dem mittels Kugellagern 22 eine Nabe 23 für ein Hinterrad 8 gelagert ist.

Durch die Teile 11 und 12 der Halterung 6 und das Klemmteil 14 erstrecken sich durchgehende Bohrungen 24 und 25, durch die nicht dargestellte Schrauben gesteckt sind, die nach Festziehen die Teile 11 und 12 der Halterung 6 gegeneinander und das Klemmteil 14 gegen das Teil 12 festziehen, wodurch die Halterung 6 klemmend auf dem Rohr 5 und das Halteteil 16 klemmend mit dem Flansch 18 zwischen Teil 12 und Klemmteil 14 gehalten sind.

Soll mit einer derartigen Anordnung die Höhe und Neigung des Sitzes 3 verstellt werden, so werden ganz einfach die durch die Bohrungen 24 und 25 verlaufenden Schrauben etwas gelöst, so daß dann die Halterung 6 auf dem Rohr 5 verschoben und zur entsprechenden Nachstellung des Sturzes und Beseitigung der Spur das Halteteil 16 durch Drehen des Zapfens 21 verdreht werden kann. Danach werden die Schrauben wieder festgezogen, so daß der Rollstuhl in der verstellten Gebrauchslage sofort wieder verwendbar ist.

Anhand der Zeichnung ist nur eine Höhenverstellung der Hinterräder beschrieben. Es ist aber auch möglich, die Halterungen 6 an Längsrohren des Rahmens 1, beispielsweise an den Rohren 3 anzubringen, um eine horizontale Verstellung der Hinterräder zu ermöglichen. Ferner kann der Rahmen 1 so ausgebildet sein, daß sowohl eine Höhenverstellung als auch auch eine Horizontalverstellung der Hinterräder möglich ist.

In der Figur 7 ist die Radachse 7 als Schraubachse dargestellt. Anstelle einer Schraubachse kann auch eine Steckachse verwendet werden, wie sie im Stand der Technik bekannt ist.

## Patentansprüche

1. Verstellbarer Rollstuhl mit einem Rahmen, an dessen Seiten jeweils die Radachsen von vorzugsweise von Hand anzutreibenden Hinterrädern mit negativem Sturz an an dem Rahmen vorgesehenen Halterungen (6) gehalten sind, die jeweils ein im wesentlichen zylindrisches und um seine Rotationsachse stufenlos verdrehbares Halteteil (16) aufweisen, die die Radachsen der Hinterräder halten und die jeweils mit einer geneigten Schrägbohrung für die Radachse der Hinterräder zur Erzielung des negativen Sturzes versehen sind, **dadurch gekennzeichnet**, daß die beidseitigen Halteteile (16) der Radachsen (7) der Hinterräder (8) in den zugeordneten Halterungen (6) unabhängig voneinander verdrehbar angeordnet und in der jeweils eingestellten Drehlage feststellbar sind.

2. Verstellbarer Rollstuhl nach Anspruch 1, **dadurch gekennzeichnet**, daß die Halterungen (6) am Rahmen (1) in der Höhe und/oder horizontal verstellbar sind.

3. Verstellbarer Rollstuhl nach Anspruch 1, **dadurch gekennzeichnet**, daß das Halteteil (16) in einer komplementären Ausnehmung (15) in der Halterung (6) festklemmbar gehalten ist.

4. Verstellbarer Rollstuhl nach Anspruch 3, **dadurch gekennzeichnet**, daß das Halteteil (16) einen umlaufenden Flansch (18) aufweist, der von einem Klemmteil (14) gegen die Halterung (6) festklemmbar ist.

5. Verstellbarer Rollstuhl nach Anspruch 1 oder 2, **dadurch gekennzeichnet**, daß die Halterung (6) entfernt von dem Halteteil (16) eine vertikale Bohrung (13) aufweist, im Bereich der Bohrung (13) quer zur Drehachse des Halteteils (16) geteilt ist und eine Stange oder ein sich durch die Bohrung erstreckendes, im wesentlichen vertikales Rohr (5) umgreift, daß sich durch die geteilte Halterung (6) und das Klemmteil (14) zu beiden Seiten der Stange oder des Rohres (5) miteinander fluchtende Bohrungen (24, 25) erstrecken, durch die Schrauben festgezogen sind, die gleichzeitig das Klemmteil (14) gegen die Halterung (6) und die beiden Teile (11, 12) der Halterung (6) gegeneinander ziehen und so gleichzeitig das Halteteil (16) für die Radachse (7) des Hinterrades (8) und die Halterung (6) an der Stange oder dem Rohr (5) festziehen.

6. Verstellbarer Rollstuhl nach einem der vorhergehenden Ansprüche, **dadurch gekennzeichnet**, daß die Halterungen (6) für die beiden Hinterräder (8) durch eine eine Hinterachse bildende Stange (9) miteinander verbunden sind.

7. Verstellbarer Rollstuhl nach einem der vorhergehenden Ansprüche, **dadurch gekennzeichnet**, daß die Radachsen (7) der Hinterräder (8) Schraub- oder Steckachsen sind.

## Claims

1. An adjustable wheelchair having a frame, to the sides of which the wheel axles of rear wheels, which are preferably to be driven by hand, are held with negative inclination on mountings (6) provided on the frame, which comprise a substantially cylindrical retention part (16), which can twist around its axis of rotation, retain the wheel axles of the rear wheels and are provided with an inclined bore for the wheel axle of the rear wheels to achieve the negative inclination,
**characterised in that** the retention parts (16), on both sides, of the wheel axles (7) of the rear wheels (8) are disposed so that they can twist independently of one another in the associated mountings (6) and can be locked in the adjusted rotational position.

2. An adjustable wheelchair according to Claim 1, **characterised in that** the mountings (6) are vertically and/or horizontally adjustable on the frame (1).

3. An adjustable wheelchair according to Claim 1, **characterised in that** the retention part (16) can be held by clamping in a complementary recess (15) in the mounting (6).

4. An adjustable wheelchair according to Claim 3, **characterised in that** the retention part (16) comprises a circumferential flange (18) which can be clamped against the mounting (6) by a clamping part (14).

5. An adjustable wheelchair according to Claim 1 or 2, **characterised in that** the mounting (6) comprises a vertical bore (13) remote from the retention part (16), is divided in the region of the bore (13) at right angles to the axis of rotation of the retention part (16) and surrounds a rod or a substantially vertical tube (5) extending through the bore,
**in that** aligning bores (24, 25) extend through the divided mounting (6) and the clamping part (14) on both sides of the rod or the tube (5), through which bores the screws are driven in, which simultaneously draw the clamping part (14) towards the mounting (6) and the two parts (11, 12) of the mounting (6) towards one another and thus simultaneously tighten the retention part (16) for the wheel axle (7) of the rear wheel (8) and the mounting (6) on the rod or the tube (5).

6. An adjustable wheelchair according to one of the preceding Claims,
**characterised in that** the mountings (6) for the two rear wheels (8) are connected to one another by a rod (9) forming a rear axle.

7. An adjustable wheelchair according to one of the preceding Claims,
**characterised in that** the wheel axles (7) of the rear wheels (8) are screw or full floating axles.

## Revendications

1. Fauteuil roulant réglable avec un châssis sur les côtés duquel respectivement les axes de roue des roues postérieures, de préférence à entraîner à la main, sont maintenus à écuanteur négative sur des fixations (6) disposées sur le châssis, qui présentent respectivement une pièce de support (16) essentiellement cylindrique et rotative en continu autour de son axe de rotation, qui supportent les axes de roue des roues postérieures et qui sont munies respectivement d'un alésage incliné pour l'axe de roue des roues postérieures pour obtenir l'écuanteur négative, caractérisé en ce que les pièces de support (16) des deux côtés des axes de roue (7) des roues postérieures (8) sont disposées pivotantes indépendamment l'une de l'autre dans les fixations (6) adjointes et peuvent être fixées dans la position angulaire réglée respective.

2. Fauteuil roulant réglable selon la revendication 1, caractérisé en ce que les fixations (6) sont réglables en hauteur et/ou horizontalement sur le châssis (1).

3. Fauteuil roulant réglable selon la revendication 1, caractérisé en ce que la pièce de support (16) est maintenue en pouvant être bloquée dans un évidement complémentaire (15) dans la fixation (6).

4. Fauteuil roulant réglable selon la revendication 3, caractérisé en ce que la pièce de support (16) présente une collerette continue (18) qui peut être bloquée contre la fixation (6) par une pièce de serrage (14).

5. Fauteuil roulant réglable selon la revendication 1 ou 2, caractérisé en ce que la fixation (6) présente un alésage vertical (13) écarté de la pièce de support (16), est divisée transversalement à l'axe de rotation de la pièce de support (16) dans la région de l'alésage (13) et entoure une barre ou un tube (5) s'étendant à travers l'alésage essentiellement verticalement, que des alésages (24, 25) alignés l'un avec l'autre s'étendent des deux côtés de la barre ou du tube (5) à travers la fixation (6) divisée et la pièce de serrage (14), à travers lesquels sont serrées à bloc des vis qui tirent simultanément la pièce de serrage (14) contre la fixation (6) et les deux parties (11, 12) de la fixation (6) l'une contre l'autre et serrent ainsi à bloc simultanément la pièce de support (16) pour l'axe de roue (7) de la roue postérieure (8) et la fixation (6) sur la barre ou le tube (5).

6. Fauteuil roulant réglable selon l'une des revendications précédentes,
caractérisé en ce que les fixations (6) pour les deux roues postérieures (8) sont reliées l'une à l'autre par une barre (9) formant un axe postérieur.

7. Fauteuil roulant réglable selon l'une des revendications précédentes,
caractérisé en ce que les axes de roue (7) des roues postérieures (8) sont des axes instantanés ou des demi-arbres.
